(19) **Europäisches Patentamt**

**European Patent Office**

**Office européen des brevets**

(11) **EP 0 379 427 B2**

(12) **NEW EUROPEAN PATENT SPECIFICATION**

(45) Date of publication and mention
of the opposition decision:
**13.08.2003 Bulletin 2003/33**

(45) Mention of the grant of the patent:
**30.03.1994 Bulletin 1994/13**

(21) Application number: **90400127.8**

(22) Date of filing: **17.01.1990**

(51) Int Cl.⁷: **B24B 9/14**

(54) **Uncut lens judging apparatus for lens grinding machine**

Rohling-Messapparat für Linsenschleifmaschine

Dispositif de mesure d'une ébauche de lentille pour machine à meuler les lentilles optiques

(84) Designated Contracting States:
**DE FR GB IT NL**

(30) Priority: **18.01.1989 JP 946789**
**18.01.1989 JP 947089**

(43) Date of publication of application:
**25.07.1990 Bulletin 1990/30**

(73) Proprietor: **Kabushiki Kaisha TOPCON**
**Tokyo (JP)**

(72) Inventors:
• **Isokawa, Nobuhiro**
**Itabashi-ku, Tokyo (JP)**
• **Suzuki, Yasuo**
**Itabashi-ku, Tokyo (JP)**
• **Hatano, Yoshiyuki**
**Itabashi-ku, Tokyo (JP)**
• **Kuwano, Shigeki**
**Itabashi-ku, Tokyo (JP)**
• **Uno, Shinji**
**Itabashi-ku, Tokyo (JP)**
• **Watanabe, Takahiro**
**Itabashi-ku, Tokyo (JP)**

(74) Representative: **Poulin, Gérard et al**
**BREVALEX**
**3, rue du docteur Lancereaux**
**75008 Paris (FR)**

(56) References cited:
**EP-A- 0 160 985**

**Description**

This invention relates to an uncut lens judging apparatus for a lens grinding machine for judging whether an uncut lens can be cut into the configuration of a lens frame of a spectacle in order to put the lens therein.

Description of the Prior Art

Apparatus according to the preamble of claim 1 and claim 4, respectively, are known, for example, from EP-A-0 160 985.

The present applicant has proposed, under Japanese Patent Application No. Sho 60-115079, a lens grinding machine for cutting an uncut lens based on a vector radius information ($\rho$ i, $\theta$ i) [ i = 1, 2, 3, ·····N] obtained by directly measuring a lens frame of a spectacle or by measuring a template having the same configuration to that of the lens frame.

This lens grinding machine has a lens measuring means for measuring the radius of the uncut lens. It also has an alarm means. This alarm means generates an alarm signal warning that the uncut lens cannot be cut into a perfect configuration of the lens frame when it finds, as a result of its comparison between the radius Ri of the lens measured by the lens diameter measuring means and the vector radius $\rho$ i, that there is a portion satisfying the relation Ri<$\rho$ i in the uncut lens. The conventional lens grinding machine also has a lens thickness measuring means in addition to the lens diameter measuring means. This lens thickness measuring means is adapted to measure the thickness of the uncut lens in accordance with the vector radius information of the lens frame.

Furthermore, the above-mentioned conventional lens grinding machine has a frame configuration measuring means for measuring the lens frame of the spectacle in order to put the lens into the lens frame and a calculating means for finding a cutting vector radius ($\rho$ i', $\theta$ i') after taking into consideration of a displaced amount between an optical center of the lens and a geometric center of the lens frame. Moreover, this lens grinding machine has a lens cutting "possible" or "impossible" judging means for comparing the vector radius length $\rho$ i' in the cutting vector radius information with the radius R of the uncut lens and generating an alarm signal when it finds a vector radius satisfying the relation $\rho$ i'$\geqq$R, said alarm signal warning the operator that the uncut lens is not large enough to cut into a perfect configuration of the lens frame.

In general, it is ideal that the optical axis of an eye wearing a spectacle is in alignment with the optical axis of a lens but actually they are not in alignment. In other words, axial displacement is taken place. This axial displacement can be classified into a horizontal direction component and a vertical direction component. The axial displacement is permissible to some extent. The permissible range of the axial displacement in the vertical direction is larger than that in the horizontal direction.

Because of the foregoing reason, even if the alarm means of the conventional lens grinding machine generates the alarm signal indicating that the uncut lens is not large enough to be cut into the configuration of a desired lens frame, there is still a possibility to cut it into the desired lens frame configuration by adequately increasing or decreasing the displacing amounts of the lens and the lens frame. In order to make this judgment, it is important to know the angular direction of the vector radius of the lens frame where the uncut lens is judged to be not large enough. However, the conventional lens grinding machine is unable to provide any information other than the alarm signal.

Moreover, as the conventional lens grinding machine requires the lens diameter measuring means in addition to the lens thickness measuring means, the machine tends to become complicated in structure and expensive.

On the other hand, there is a spectacle so called "half-eye frame lens" which is for the exclusive use of a short-sighted person and width of a lens frame of which is extremely narrow in the vertical direction. When such spectacle is to be cut by the conventional lens grinding machine having the usual clamping member for clamping the lens on its lens rotational shaft, the diameter of the clamping member becomes too large with respect to the short diameter of the lens frame. As a result, there is such a case where the lens cannot be cut correctly. There is no problem when the displacing amount is zero. However, if the slightest displacement is taken place, there is another case where the cutting locus of the lens enters into the clamping range. In such case, if the lens is ground by a grinder, there is a fear that the clamping member is also ground by the grinder, thus inviting breakage of the lens grinding machine.

The above-mentioned shortcoming is not limited to the half-frame lens but also occurrable to the general spectacles when the displacing amount becomes large.

In the above-mentioned conventional lens grinding machine in which the configuration of the lens frame is memorized in the form of an electric signal of a vector radius information and the lens is cut in accordance with the memorized vector radius information, it is impossible to physically make sure the positional relation between the lens and the cutting vector radius by eye. Therefore, it is still more difficult to make a judgment whether the lens may be cut before the lens cutting operation is started. And the conventional lens grinding machine has no means for checking whether the lens may be cut before the cutting operation is started.

SUMMARY OF THE INVENTION

It is therefore a first object of the present invention to provide an uncut lens judging apparatus for a lens grinding machine which is capable of making a judgment whether an uncut lens is large enough to be cut into a configuration corresponding to the lens frame configuration and, if negative, providing at least an angular information of the vector radius which is judged to be not large enough.

The judging means includes lens thickness measuring means for measuring the thickness of said uncut lens in accordance with said vector radius information and is set in such a manner as to judge that said uncut lens is not large enough to be cut into said lens frame configuration when said lens thickness measuring means outputs a thickness signal of a predetermined value or less.

The lens thickness measuring means includes two fillers one of which is to be abutted against a front surface of said lens and the other of which is to be abutted against a rear surface of said lens, and measuring means for measuring a distance between said two fillers.

This first object can be achieved with an uncut lens judging apparatus according to claim 1.

Another object of the present invention is to provide an uncut lens judging apparatus for a lens grinding machine which is capable of automatically changing the displacing amounts of the lens and the lens frame when the uncut lens is not large enough to be cut into a lens frame configuration, so that the uncut lens can be cut into the lens frame configuration.

This object can be achieved with the apparatus according to claim 2.

Advantages of the present invention will be well appreciated upon reading of the following description of the invention when taken in conjunction with the attached drawings with understanding that some modification, variations and changes of the same could be made by the skilled person in the art to which the invention pertains without departing from the scope of the invention which is defined in the claims appended thereto.

BRIEF DESCRIPTION OF THE ATTACHED DRAWINGS

Fig. 1 is a block diagram showing one embodiment of a judging apparatus according to the present invention.

Figs. 2A through 2C are schematic views for explaining the principle of measurement of the thickness of an uncut lens by a filler.

Fig. 3 is a schematic view for explaining the vector radius information of a lens frame and the displaced amount.

Fig. 4A is a schematic view for explaining a correlation among a lens, a lens frame locus and a displaced amount of the lens.

Fig. 4B is a schematic view for explaining the principle of the operation of the present invention.

Fig. 5 is a schematic view showing one example of an input apparatus and a display apparatus.

Fig. 6 is a schematic view for explaining how the shortage of the radius of an uncut lens is offset by correction of the displaced amount.

Fig. 7 is a schematic view showing one example of the calculation principle for calculating the correction of displacement.

Fig. 8 is a schematic view showing another example of the calculation principle for calculating the correction of displacement.

Fig. 9 is a block diagram showing another embodiment of the present invention.

Fig. 10A is a schematic view showing a relation between the construction of a tip portion of a filler and a lens.

Fig. 10B is a schematic view showing a state where the filler is prevented from advancing by a lens clamping member and for explaining still another embodiment of the present invention.

Fig. 11 is a flow chart for explaining the action of the embodiment shown in Fig. 9.

Fig. 12 is a schematic view for explaining the principle of action of the embodiment shown in Fig. 9.

Fig. 13 is a block diagram showing the construction of a further embodiment of the present invention.

Fig. 14 is a flow chart showing the operation of the embodiment shown in Fig. 13.

Fig. 15 is a schematic view showing the principle of action of the embodiment shown in Fig. 13.

DESCRIPTION OF THE PREFERRED EMBODIMENT

The present invention will be described hereinafter with reference to the drawings.

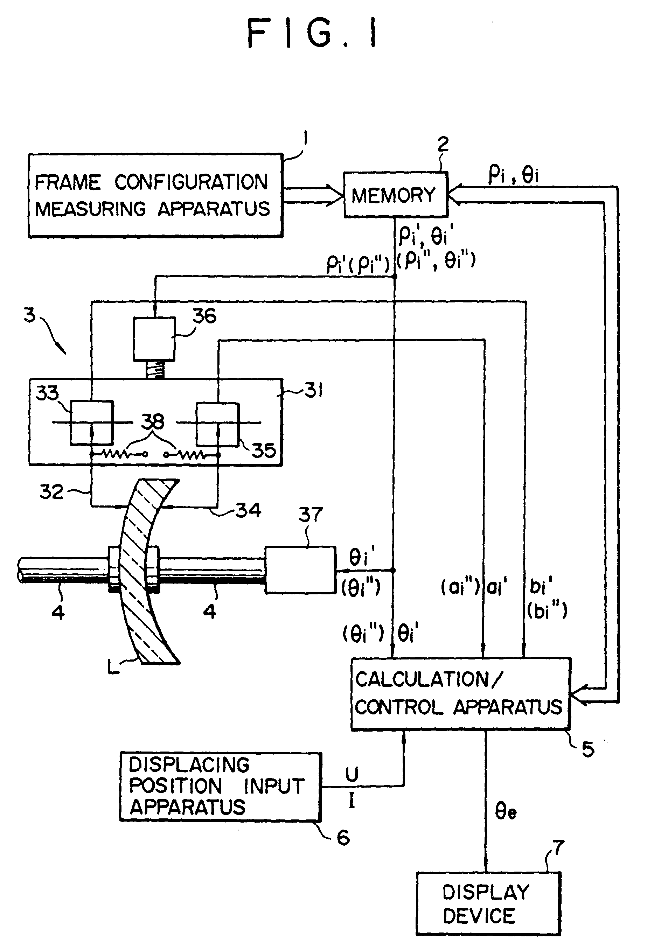

Fig. 1 is a block diagram showing an uncut lens judging apparatus according to the present invention.

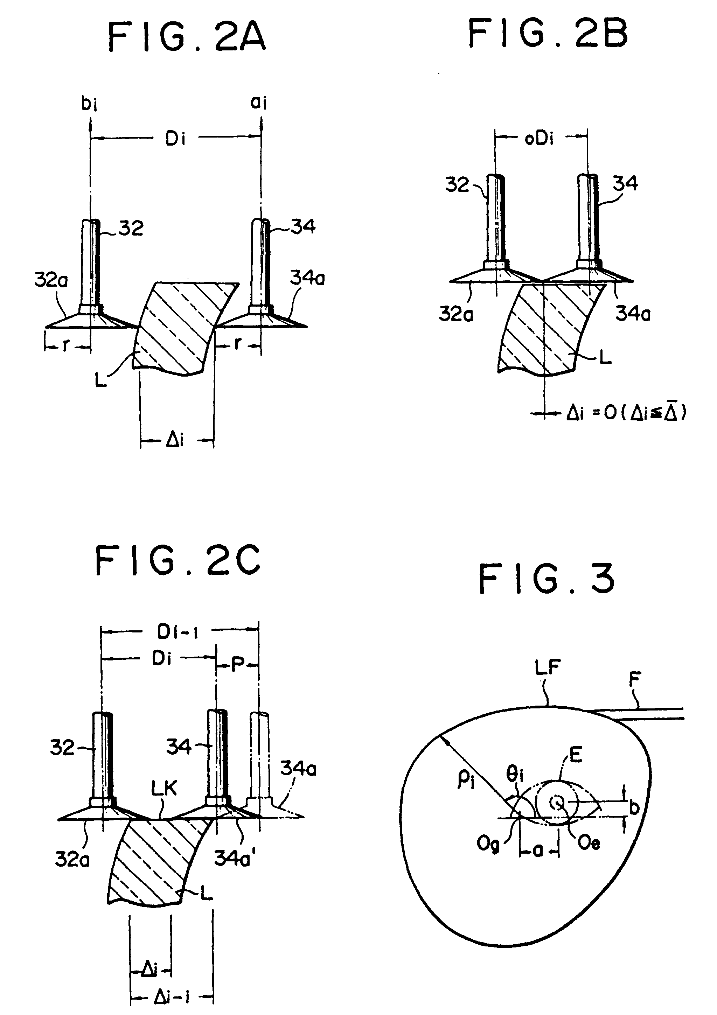

In this Fig. 1, the numeral 1 denotes a frame configuration measuring apparatus for measuring the configuration of a lens frame of a spectacle. This frame configuration measuring apparatus 1, as shown in Fig. 3, measures the configuration of a lens frame LF as a vector radius information $(\rho i, \theta i)$ [i = 1, 2, 3, $\cdots\cdots$N] directly from the lens frame LF or likewise measures a vector radius information of the configuration of a template obtained by copying the lens frame LF. The detailed construction and operation of this frame configuration measuring apparatus 1 is disclosed in previous applications filed by the present applicant under Japanese Patent Application No. Sho 60-115079 and Japanese Patent Application No. Sho 60-287491. Instead of using this frame configuration measuring apparatus 1, there may be employed a data input apparatus for reading a configuration data of the lens frame LF which is measured by the frame configuration measuring apparatus 1 and memorized in a memory medium such as memory disk, 1C card, floppy disk, etc. and inputting the data into the lens grind machine.

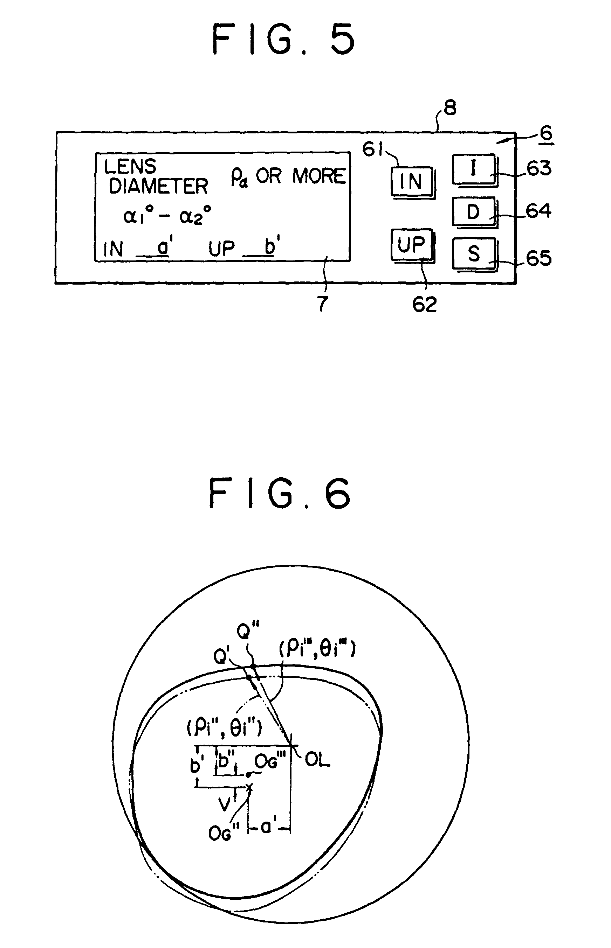

Such obtained vector radius information of the lens frame LF measured by the frame configuration measuring apparatus 1 and the template is input into a memory 2. This memory 2 is connected with a calculation / control apparatus 5 as such that information can be transmitted to and from the memory 2 and the apparatus 5, and this calculation / control apparatus 5 is connected with a displaced position inputting apparatus 6. This displaced position inputting apparatus 6, as shown in Fig. 5, has operating buttons 61~65 arranged on an operation panel 8. Also, the calculation / control apparatus 5 is connected with a displaying device or display 7 formed of, for example, a liquid crystal (see the displaying example of Fig. 5).

Usually, it is seldom that an uncut lens L is cut as such that the geometrical center Og of the lens frame LF is in alignment with an optical axis Oe of an eye E wearing the spectacle. Usually, the optical axis Oe and the geometrical center Og has a displacement denoted by $a$ in the horizontal direction and by $b$ in the vertical direction. The displaced amount $a$ is called as "inwardly sided amount", while the displaced amount $b$ is called as "upwardly sided amount".

The calculation / contorol apparatus 5 calculates the inwardly sided amount $a$ and the upwardly sided amount $b$ based on the pre-input frame PD of the spectacle (distance between the geometrical centers of the pair of lens frames), distance between the pair of pupils of the eye E wearing the spectacle, distance from the lowermost end of the lens frame to the optical axis Oe of the spectacle wearing eye E and the like. If the lens L is cut in such a manner as that the optical axis OL of the uncut lens L is displaced to a position having the inwardly sided amount $a$ and the upwardly sided amount $b$, i.e., the displaced amounts $a$ and b, the optical axis OL is brought to be in alignment with the optical axis Oe of the eye E wearing the spectacle when the lens L is put into the lens frame LF. To this end, the calculation / control apparatus 5 coordinate converts the vector radius information $(\rho i, \theta i)$ of the lens frame based on the geometrical center OG of the lens frame to a vector radius information $(\rho i', \theta i)$ based on the lens cutting origin OL' which is a position of the optical axis after the lens is displaced. The new vector radius information $(\rho i', \theta i')$ after the conversion converted is stored in the memory 2.

The numeral 3 denotes a lens thickness measuring apparatus, the construction and operation of which are the same to those described in detail in the above-mentioned Japanese Patent Application No. Sho 60-115079. This lens thickness measuring apparatus 3 has a stage 31 which is driven forward and backward by a pulse motor 36. The stage 31 is provided with a pair of fillers 32 and 34 for clamping the lens L. The fillers 32 and 34 are energized in the mutually approaching direction by springs 38, 38 in order to always clamp the lens L. Also, the fillers 32 and 34, as shown in Fig. 2A, have disks 32a and 34a of a radius r which are rotatably supported by each axis.

On the other hand, lens rotational shafts 4, 4 of a carriage (not shown) are disposed in such a manner as to be rotatable by a pulse motor 37 and the lens L is clamped by these lens rotational shafts 4, 4. As a result, the lens L is rotated by the pulse motor 37. The optical axis OL of the lens L is in alignment with the axis of the rotational shafts 4, 4.

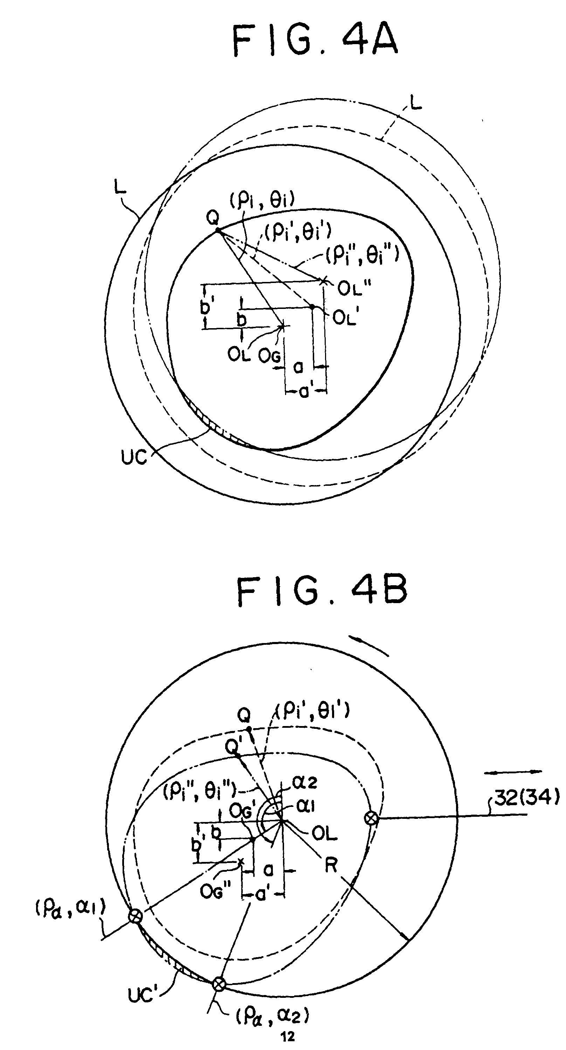

Among the vector radius information $(\rho i', \theta i')$ from the memory 2, the angular information $\theta i'$ is input into the pulse motor 37, and the pulse motor 37 rotates the lens L by angle $\theta i'$ from the reference position in accordance with the angle. On the other hand, a vector radius length $\rho i'$ is input into the pulse motor 36 in order to move the disks 32a and 34a of the fillers 32 and 34 forward and backward through the stage 31 so that they are brought to position of the vector radius length $\rho i'$ from the optical axis OL as shown in Fig. 4B. And the moved amounts ai and bi of the fillers 32 and 34 at this position are detected by encoders 33 and 35. Detection signals from the encoders 33 and 35 are input into the calculation / control apparatus 5.

The calculation / control apparatus 5 calculates the relations bi - ai = D and Di - 2r = $\Delta$ i and figures out a lens thickness $\Delta$ i.

As is shown in Fig. 4A, in the lens L which is displaced such that it has an optical axis at a new cutting origin OL", if the sided amounts a' and b' become large, the lens frame locus $(\rho i'', \theta i'')$ cannot be taken completely and the hatching portion UC is positioned outside the lens L.

When the lens thickness $\Delta$ i" is measured in accordance with the vector radius information $(\rho i'', \theta i'')$ based on this cutting origin OL", the disks 32a and 34a of the fillers 32 and 34 are abutted against each other as shown in Fig. 2B within the angular range of the vector radius angle $\alpha 1 \sim \alpha 2$ as shown in Fig. 4B, and the lens thickness $\Delta$ i becomes $\Delta$ i = 0.

And the calculation / control apparatus 5 detects the fact that the lens thickness $\Delta$ i became zero and judges that even if positioned in desired displacement positions a' and b', the lens L cannot be completely cut into the configuration of a lens frame having the vector radius $(\rho i'', \theta i'')$ and that the hatching portion UC' is in short.

The calculation / control apparatus 5, as shown in Fig. 5, displays angle of the first vector radius angle $\alpha 1$ or the last vector radius $\alpha 2$ or both after the lens thickness $\Delta$ i becomes zero. At this time, the image of Fig. 4B may be displayed on the display device 7. Also, as the vector radius $\rho \alpha$ is coincident with the radius R of the lens L at the time when the lens thickness $\Delta$ i becomes zero, the radius of the lens L can be known from the vector radius length $\rho \alpha$. Therefore, when the measurement is effected exceeding the vector radius $\rho \alpha$, the fact that the lens radius must be $\rho \alpha$ (=R) or more is displayed on the display device 7 to inform the fact to the operator. At this time, the displaced amounts a' and b' are simultaneously displayed on the display device 7. In the drawing, IN means "inwardly sided" and UP means "upwardly sided".

In the above-mentioned example, it is judged as shortage of the lens diameter only when the lens thickness $\Delta$ i becomes zero. However, the present invention is not necessarily limited to this. For example, it may be judged as shortage of the lens diameter when $\Delta$ i $\leqq \bar{\Delta}$ by anticipating an expected tolerance $\bar{\Delta}$. Also it is expected that the disks 32a and 34a of the fillers 32 and 34 are caught by the lens edge surface LK as shown in Fig. 2C. Therefore, it can be judged whether the lens may be cut with reference to the measured lens thickness $\Delta$ i-1 of the vector radius ($\rho$ i-1, $\theta$ i-1) and the lens thickness $\Delta$ i of the vector radius ($\rho$ i", $\theta$ i"). That is, it may be judged as that the fillers 32 and 34 are brought to be outside the lens L, in other words, there is a longer vector radius length portion than the radius R of the lens L and thus as shortage of the lens diameter when the changed amount $\Delta$ i - $\Delta$ i-1 = P of the $\Delta$ i-1 and $\Delta$ i is a predetermined value $\bar{P}$ or more ($\bar{P} \leqq$ P).

The operator makes his own judgment about the increasing or decreasing amount of displacement in the vertical direction in view of the required lens diameter $\rho \alpha$ and angular information $\alpha$ 1 or $\alpha$ 2 or lens diameter short position or range of "$\alpha$ 1~$\alpha$ 2" or displaced amounts a' and b', etc. which are displayed on the display device 7 and turns on the UP button of the displacing position input apparatus 6. Then, the operator operates a D button 64 to decrease the vertical direction displacing amount, i.e., upwardly sided amount b' to b". That is, by moving the geometrical center OG" of the lens frame upward by a distance V to OG''', the whole circumference of the new lens frame vector radius locus ($\rho$ i''', $\theta$ i''') can be positioned within the lens L as shown in Fig. 6. As a result, it has no lens diameter shortage any more.

The operator rechecks the lens thickness $\Delta$ i [i = 1, 2, 3, ·····N] with the new displaced amounts a' and b" and makes sure that $\Delta$ i does not become zero. An I button is used for increasing the displacing amount. When the IN button is pressed, the horizontal direction, i.e., inwardly sided amount a' is changed.

Instead of changing the displacing amount based on the judgment of the operator, a new displacing amount for generating no lens diameter shortage may be automatically found by the calculation / control apparatus 5.

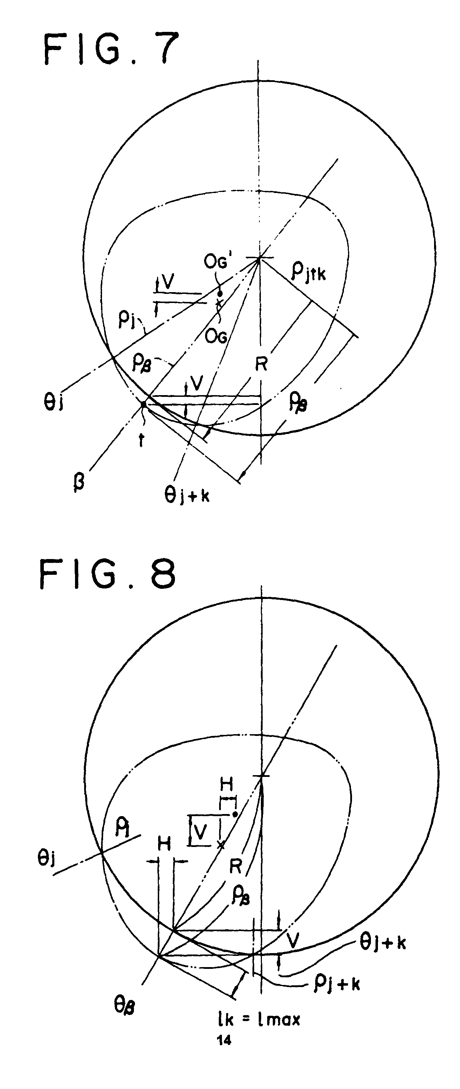

Fig. 7 shows one example of that. In this example, a relation $\rho$ j+k·sin$\theta$ j+k = Vk [k = 1, 2, 3, ·····k] is calculated within a lens diameter short range $\theta$ j through $\theta$ j+k to find the maximum value V of Vk, and then the center OG of the lens frame is moved by this V-portion toward OG'.

Fig. 8 shows another example. In this example, a vector radius ($\rho$ $\beta$, $\theta$ $\beta$) is found where a difference $\rho$ j+k-R = 1k [k = 1, 2, 3, ·····k] between the vector radius $\rho$j~$\rho$j+k within the lens diameter short range angle $\theta$ j~ $\theta$ j+k and lens radius R and then 1max·sin$\theta$ $\beta$= V and 1max·cos$\theta$ $\beta$ = H are calculated, and then the respective displacing amounts are corrected by the horizontal direction (inwardly sided) H portion and vertical direction (upwardly sided) portion V.

And the displacing amounts after correction based on Fig. 7 or Fig. 8 are displayed on the display device 7. When the operator judges the corrected displacing amounts are OK, he presses the S-button. As a result, the calculation / control apparatus 5 performs coordinate conversion of a vector radius based on this new cutting origin and cuts the lens based thereon.

If a lens diameter is input by an input apparatus (not shown) beforehand, a displacing amount for generating no lens diameter shortage can be obtained from the beginning.

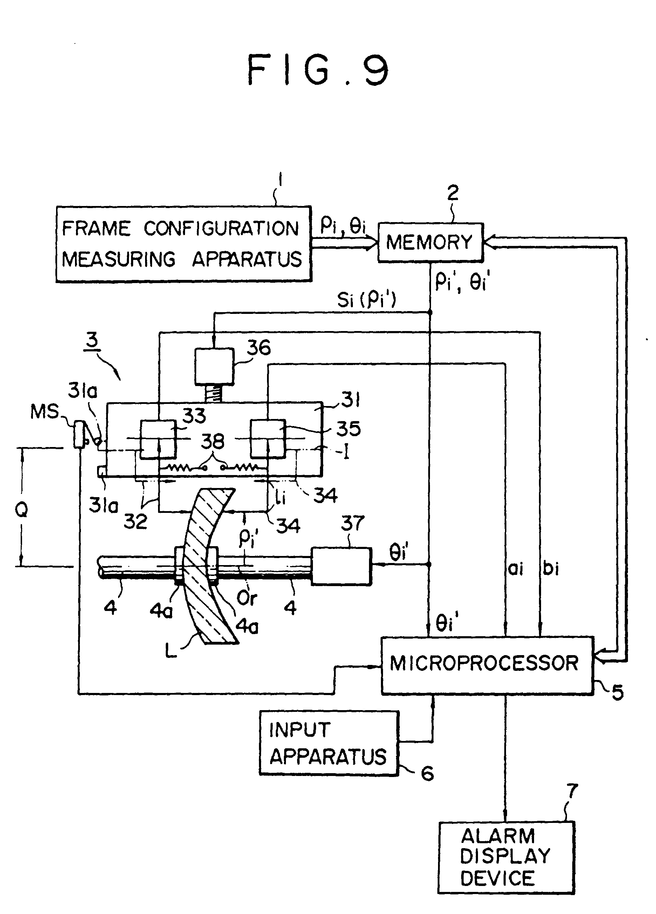

Fig. 9 is a block diagram showing the construction of another embodiment of an uncut lens cutting "possible" or "impossible" judging apparatus for the use of a lens grinding machine according to the present invention.

In Fig. 9, the numeral 1 denotes a frame configuration measuring apparatus. This frame configuration measuring apparatus 1 measures the configuration of a lens frame of a spectacle, for example, the configuration shown by LF of Fig. 4, as a numerical value information (electric signal) of the vector radius information ($\rho$ i, $\theta$ i) and stores the same in the memory 2. The construction and operation of this frame configuration measuring apparatus 1 are the same to those described in detail in the above-mentioned Japanese Patent Application No. Sho 60-115079 and Japanese Patent Application No. Sho 60-287491.

The numeral 3 denotes a measuring apparatus for measuring the thickness of the lens L. This measuring apparatus 3 has a pulse motor 36 and a movable stage 31 which is interlocked with the pulse motor 36 and caused to be approached to and separated apart from the lens L. The movable stage 31 is provided on its side surface with, for example, a projecting pin 31a, so that when the movable stage 31 is returned to its initial position, a microswitch MS is pressed to be turned on. The movable stage 31 is provided thereon with a pair of fillers 32 and 34 which are abutted against front and rear refractive surfaces of the lens L, a pair of springs 38, 38 for energizing the fillers 32 and 34 so that they are always approaching with respect to each other, and a pair of encoders 33 and 35 for detecting the moved amounts ai and bi of the fillers 32 and 34. The moved amounts ai and bi of the fillers 32 and 34 detected by the encoders 33 and 35 are input into a microprocessor 5.

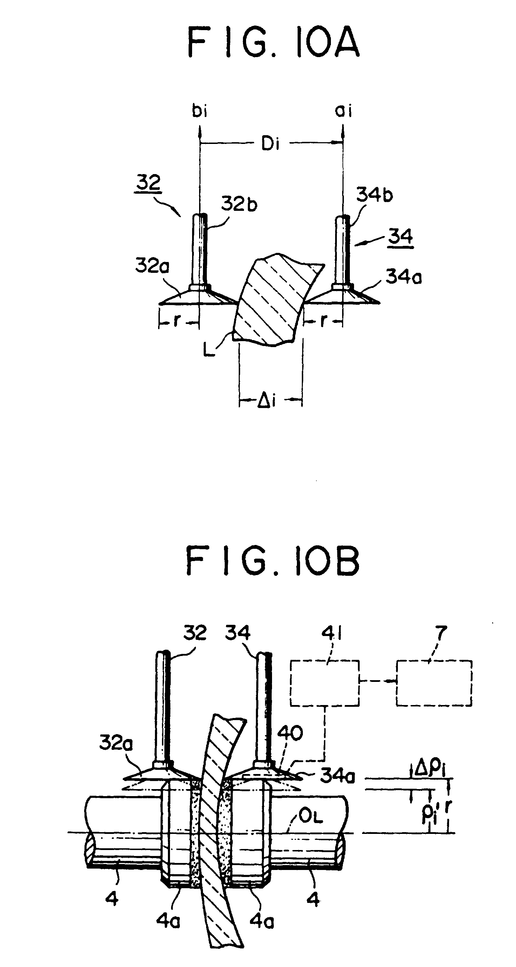

The fillers 32 and 34, as shown in Fig. 10A, have rotary disks 32a and 34a having a radius r, and filler shafts 32b and 34b supporting the rotary disks 32a and 34a on tip portions thereof. And the fillers 32 and 34 are caused to clamp the lens L by the springs 38, 38. If the intershaft distance between the filler shafts 32b and 34b is represented by Di, Di - 2r = $\Delta$ i becomes the thickness of the lens. The lens L is clamped by clamping members 4a, 4a of lens rotary shafts 4, 4 of a carriage (not shown), and the lens rotary shafts 4,4 are driven to be rotated by the pulse motor 37. Accordingly, the lens L is integrally driven to be rotated by the pulse motor 37 together with the lens rotary shafts 4, 4. Moreover, the pulse motors 36 and 37 are connected to the memory 2.

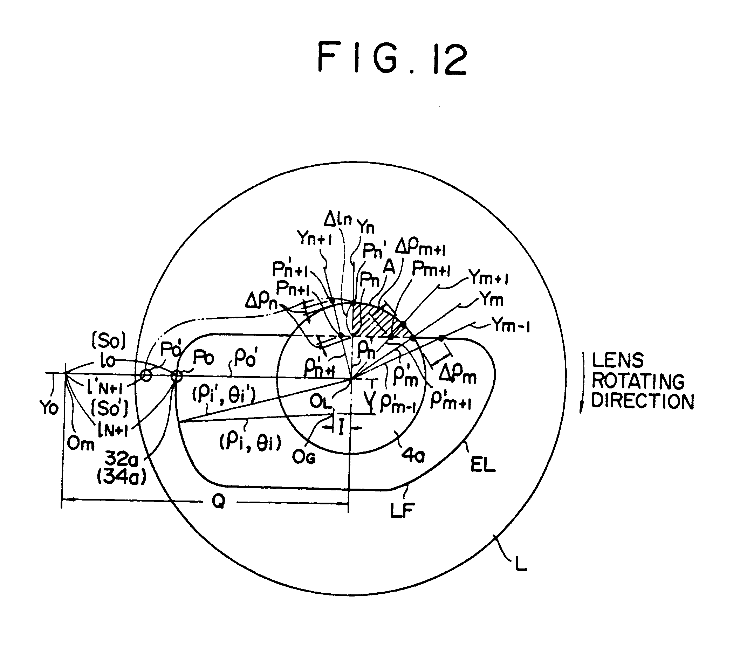

The microprocessor 5 is connected to the memory 2, the input apparatus 6, and the alarm display device 7. This input apparatus 6 is adapted to input the displacing amounts represented by the upwardly sided amount U and the inwardly sided amount I shown in Fig. 12. The alarm display device 7 comprises, for example, a liquid crystal display or a lamp.

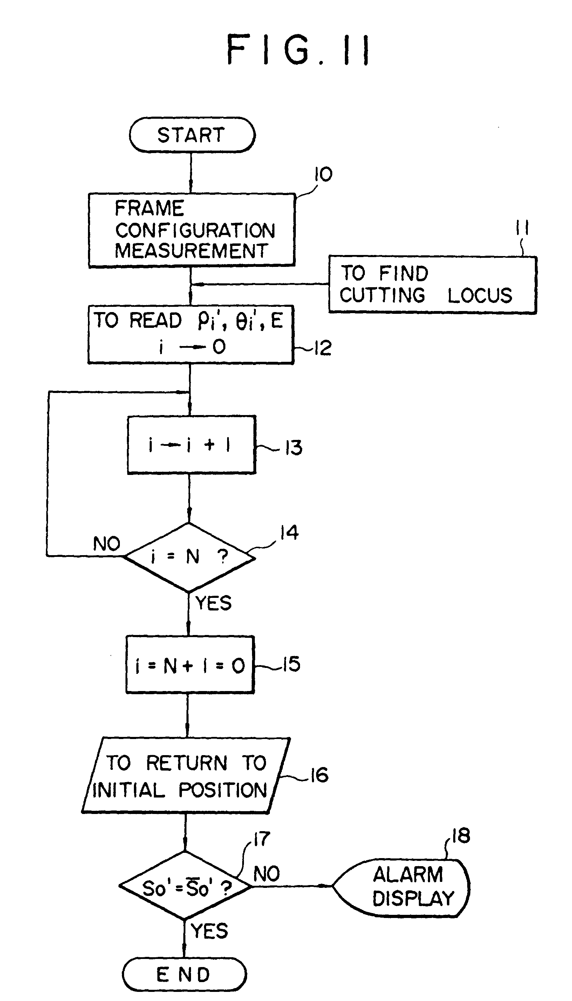

Next, the operation of the present embodiment will be described in accordance with the flow chart of Fig. 11.

### Step 10

The configuration of the lens frame LF of a spectacle is found as a vector radius information ($\rho$ i, $\theta$ i) [i = 1, 2, 3, ··· ···N] by the frame configuration measuring apparatus 1 and the result is stored in the memory 2.

### Step 11

This step is carried out in accordance with necessity. That is, as is shown in Fig. 12, this step is carried out only when the displacements of the optical center OL of the lens and the geometrical center OG of the lens frame LF are necessary. The displacing amounts U and I are input into the microprocessor 5 by the input apparatus 6. This microprocessor 5 finds the cutting locus EL after displacement and stores the vector radius information ($\rho$ i', $\theta$ i'). Amethod for finding this cutting locus EL is the same to that described in detail in Japanese Patent Application No. Sho 60-115079.

The data of an initial vector radius ($\rho$ 0', $\theta$ 0') of i = 0 among the cutting vector radius ($\rho$ i', $\theta$ i') which is stored in the memory 2 is input into the pulse motors 36 and 37. By this, the pulse motor 37 causes the lens rotary shafts 4, 4 to be rotated so that the moving direction Y of the fillers 32 and 34 is brought to be in alignment with the initial vector radius angle $\theta$ 0' of the lens. In Fig. 12, instead of the rotation of the lens L, it is illustrated for the purpose of convenience that the moving direction Y of the fillers 32 and 34 is rotated and the suffix of i [i = 1, 2, 3, ·····N] is provided in the moving direction Y in accordance with the rotating angle $\theta$ i'.

If a position away from the axial line ( which is in alignment with the optical center of the lens L) of the lens rotational shafts 4,4 by a known distance Q is set to the initial position Om of the stage 31, it is necessary that the fillers 32 and 34 are moved along the configuration of the lens frame LM in accordance with the rotation of the lens rotational shafts 4, 4. That is, it is necessary that the stage 31 is moved as such that the rotating disks 32a and 34a on the tips of the fillers 32 and 34 are brought to the position denoted by $\rho$ i' from the axial line (which is in alignment with the optical center of the lens L) of the lens rotational shafts 4, 4 in accordance with the cutting vector radius lens $\rho$ i' as shown in Fig. 9. To this end, a pulse number Si necessary for advancing the stage 31 by a moving distance 1i = Q - $\rho$ i' is fed to the pulse motor 36.

That is, when the vector radius information ($\rho$ 0', $\theta$ 0') of i = 0 is read from the memory 2, the rotary disks 32a and 34a on the tips of the fillers 32 and 34 are brought to the position denoted by the vector radius length $\rho$ 0' as shown in Fig. 12, and the pulse amount to be fed to the pulse motor 36 at that time becomes S0.

### Steps 13~15

In these step, i = 1 is added. That is, it is made as 0 + 1 = 1, then next vector radius ($\rho$ i', $\theta$ i,) is read from the memory 2 and a pulse for the amount equal to a portion of $\rho$1'- $\rho$0'=S1 - S0=$\Delta$ S1 is fed to the pulse motor 36 to move the rotary disks 32a and 34a on the tips of the fillers 32 and 34 are moved to the position denoted by the vector radius $\rho$ 1'. A pulse for the amount equal to a portion of $\theta$ 1' - $\theta$ 0' = $\Delta$ $\theta$ (unit rotating angle) is fed to the pulse motor 37. In the same procedure as mentioned above, the vector radius information is gradually read from the memory 2 and a pulse equal to a difference between the preceding vector radius and the vector radius to follow is fed to the motor 36, and a pulse equal to a unit rotating angle portion is fed to the pulse motor 37.

In Fig. 12, there is illustrated a state where the filler moving direction Y is rotated instead of rotating the lens for the purpose of convenience.

The moved amounts of the fillers 32 and 34 of $\rho$'m from the vector radius $\rho$ 'm-1 becomes $\Delta$ $\rho$ m and the pulse number required for the movement of the fillers 32 and 34 becomes $\Delta$ Sm. Also, the moving amounts of the fillers 32 and 34 from the vector radius $\rho$ 'm to $\rho$ 'm+1 is $\Delta$ $\rho$ m+1, and the pulse number required for the movement of the fillers 32 and 34 is $\Delta$ Sm+1. However, as the fillers 32 and 34 are abutted against the side surfaces of the lens clamping members 4a, 4a and prevented from advancing as shown in Fig. 10B, such fed pulse number $\Delta$ $\rho$ m+1 is thrown away due to step-out phenomenon of the motor.

This phenomenon is repeated until it reaches $\rho$ 'n. That is, the pulse number (the hatching portion A) fed for moving the fillers to the vector radius $\rho$'m+1~$\rho$'n is all thrown away because the fillers 32 and 34 are prevented from moving by the lens clamping members 4a, 4a.

However, in the movement of the fillers from the vector radius $\rho$ 'n to the vector $\rho$ 'n+1, as $\rho$ 'n<$\rho$ 'n+1, the fillers move in the retreating direction from the lens L, and the feed pulse number $\Delta$ Sn for the moving

amount $\Delta \rho$ n of the fillers is minus, i.e., it becomes a pulse for inverting the pulse motor 36. Accordingly, the fillers 32 and 34 are moved by a portion equal to $\Delta \rho$ n utilizing a pulse for a portion equal to the feed pulse number $\Delta$ Sn without being prevented by the lens clamping members 4a, 4a. However, in the preceding vector radius $\rho$'n, as the fillers 32 and 34 are not in the regular position Pn but in the position Pn' due to prevention caused by the lens clamping members 4a, 4a. Accordingly, the position after movement of the fillers is moved not to the regular Pn+1 but to the <P'n+1 in the vector radius $\rho$ 'n+1.

Similarly, i is gradually progressed to N + 1 = 0, i.e., until it becomes the initial vector radius. And the rotary disks 32a and 34a on the tips of the fillers are not in the regular position P0 but in the position P0' after it moves around the cutting locus EL.

Steps 16 and 17

The microprocessor 5 feeds an inverted pulse number S0' having a relation of | S0' | = S0 to the pulse motor 36 in order to return the stage 31 to the initial position Q. In this case, if the fillers 32 and 34 are at P0, when the inverted pulse number S0' is fed, the microswitch MS is turned on by the projecting pin 31a.

However, as the fillers 32 and 34 are in position P0', the projecting pin 31a ofthe stage 31 turns on the microswitch MS before all pulse number S0' is fed to the pulse motor 36. That is, the projecting pin 31a is turned on with the pulse number $\overline{S0'}$ smaller than the pulse number SO'. And the microprocessor 5 compares the feed pulse number $\overline{S0'}$ to the pulse motor 36 when the microswitch MS is actually in its ON position with the pulse number S0' ($\overline{S0'}$<S0') required for fillers 32, 34 to be returned to the initial position.

Step 18

As a result of the comparison, if it is not $\overline{S0'}$ = S0', the alarm display device 7 generates an alarm signal to the operator telling him that the lens L cannot be cut in such a manner as to have the cutting locus EL.

As described in the foregoing, in the present embodiment, in case there is a difference between the position of the initial vector radius ($\rho$ 0', $\theta$ 0') of the fillers 32 and 34 and the filler position of the vector radius ($\rho$ 'N+1, $\theta$ 'N+1) = ($\rho$ 0', $\theta$ 0') after it moved around the cutting locus, it judges that a part of the cutting locus enters into the lens clamping range and generates an arming signal telling that the lens cutting is impossible.

And this lens cutting "impossible" judging apparatus also acts as a lens thickness measuring means utilized for automatically deciding the V-edge position for cutting the lens L so that it is formed with a V-edge in the same manner as described in detail in Japanese Patent Application No. Sho 60-115079.

Fig. 10B shows another example of the present invention.

The present embodiment, as shown in Fig. 10B, is designed such that, for example, a rotary disk 34a of the filler 34 is provided on its front surface with a contact detecting sensor 40 such as electric capacity type sensor, pressure sensitive element, etc., so that when it detects that the rotary disk 34a is abutted against the side surface of the lens clamping member 4a, the alarm display device 7 is actuated by an actuator 41.

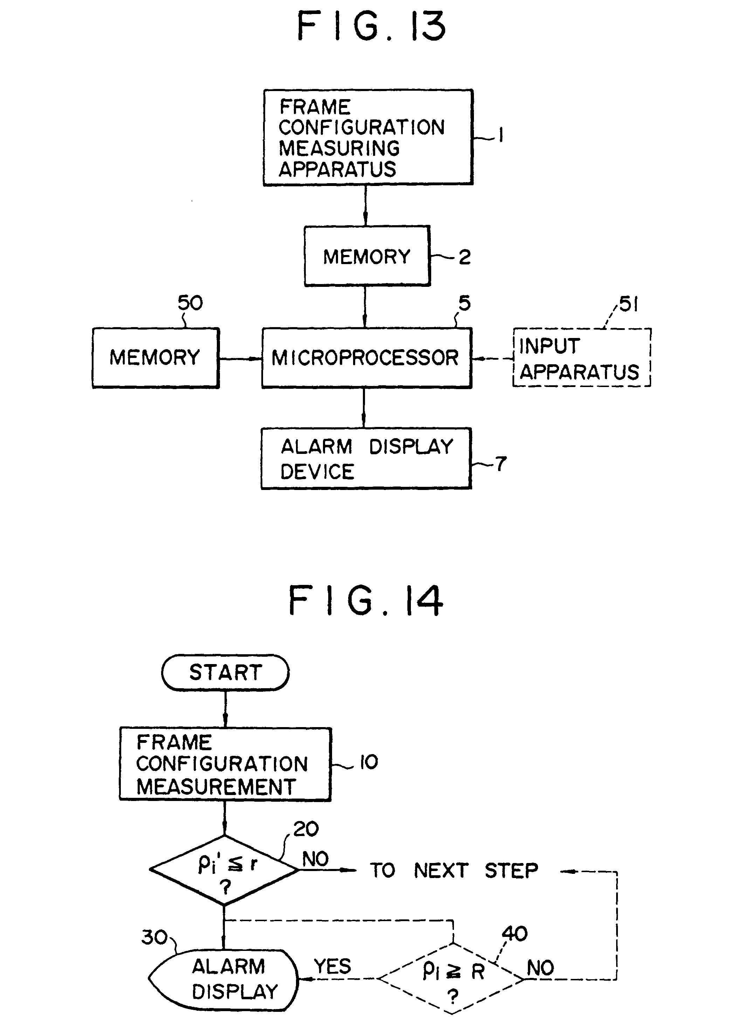

Fig. 13 shows still another example of the present invention.

The present embodiment, as shown in a block diagram of Fig. 13, has a frame configuration measuring apparatus 1, a memory 2, a microprocessor 5, and an alarm display device 7, all of the same type of the embodiment of Fig. 10B. Moreover, the microprocessor 5 is connected with a memory 50 for memorizing the value of the radius r of the lens clamping member 4a beforehand.

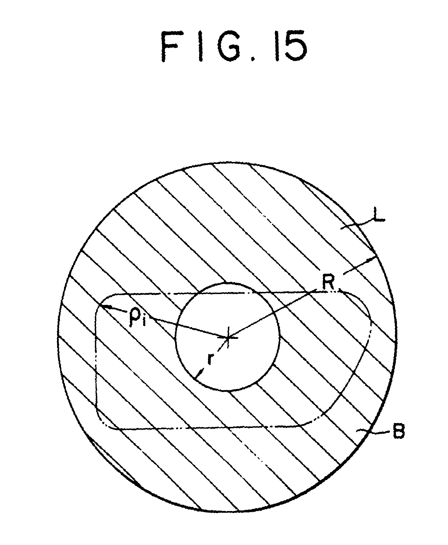

And as the flow chart shown in Fig. 14, the vector radius information ($\rho$ i, $\theta$ i) of the lens frame is measured by the frame configuration measuring apparatus 1 in Step 10. Then, in Step 20, after calculating the vector radius information ($\rho$ i', $\theta$ i') of the cutting locus in which the displacing amount of the lens is added in accordance with necessity, the microprocessor 5 compares the cutting vector radius length $\rho$ i' with the radius r of the lens clamping member 4a from the memory 50. And if $\rho$ i' $\leqq$ r, then it goes to Step 30 wherein it judges that a part of the locus is outside the lens cutting possible range (hatching portion B), i.e., within the lens clamping range as shown in Fig. 15 and that the lens cutting is impossible. Then, it actuates the alarm device 7 to generate an alarm signal.

The microprocessor 5 is connected with the input apparatus 51 in accordance with necessity as disclosed in Japanese Patent Application No. Sho 60-115079, so that the radius R of the lens L can be input therein. And as shown in the flow chart of Fig. 14 as Step 40, if the cutting vector radius $\rho$ i is larger than the radius R, it judges that the vector radius $\rho$ i comes outside the lens L and causes the alarm device to generate an alarm signal telling the operator that the lens cutting is impossible.

As described in the foregoing, according to the present invention, as the lens diameter short position can be shown by angle display, it can be of great help for the operator when he judges the degree of correction of the displacing amount of the lens in order to avoid the lens diameter shortage.

Also, if it is designed such that this can be automatically calculated, it becomes more convenient.

Furthermore, according to the present invention, as the lens thickness measuring apparatus is commonly used as a lens diameter shortage judging apparatus, a member for the exclusive use of judging the lens diameter as in the prior art is no more required.

In addition, according to the present invention, there can be provided such a lens cutting "possible" or "impossible" judging apparatus which is capable of knowing whether the cutting locus enters within the lens clamping range, and if it enters, generating an alarm signal telling the operator that the lens cutting is impossible.

By this, cutting errors and breakage of the lens grinding machine can be prevented from occurring.

## Claims

1.  An uncut lens judging apparatus for a lens grinding machine including :

    -   frame configuration input for inputting a vector radius information of the configuration of a lens frame of a spectacle ;
    -   a lens thickness measuring apparatus including two feelers of said lens, and a measuring apparatus for measuring a distance as a thickness between said two feelers ;
    -   calculation/control apparatus for judging whether said uncut lens is large enough to be cut into said lens frame configuration ;
    -   display device controlled by said calculation/ control apparatus ;

    **characterized in that**

    -   one of the two feelers is to abutted against a front surface of said uncut lens and the other of which is to be abutted against a rear surface of said lens ; and
    -   display device controlled by said calculation/ control apparatus so as to display at least an angular range ($\alpha_1$ and/or $\alpha_2$) of said vector radius which is judged to be not large enough when said two feelers are abutted against each other and said lens thickness measuring apparatus outputs a thickness signal of a predetermined value or less.

2.  An uncut lens judging apparatus for a lens grinding machine including :

    -   frame configuration input for inputting a vector radius information of the configuration of a lens frame of a spectacle ;
    -   a lens thickness measuring apparatus including two feelers of said lens, and a measuring apparatus for measuring a distance as a lens thickness between said two feelers ;
    -   calculation/control apparatus for judging whether said uncut lens is large enough to be cut into said lens frame configuration ;
    -   display device controlled by said calculation/ control apparatus ;

    **characterized in that**

    -   one of the two feelers is to abutted against a front surface of said uncut lens and the other of which is to be abutted against a rear surface of said lens ; and
    -   said calculation/control apparatus automatically corrects a cutting origin when said lens thickness measuring apparatus comes off the surface of said lens and said calculation/control apparatus judged the uncut lens is not large enough to be cut into said lens frame configuration when said two feelers are abutted against each other and said lens thickness measuring apparatus outputs a thickness signal of predetermined value or less.

## Patentansprüche

1.  Linsenrohling-Beurteilungsapparat für eine Linsenschleifmaschine, enthaltend:

    einen Rahmenkonfigurations-Eingabeapparat zum Eingeben einer Vektorradiusinformation über die Konfiguration eines Linsenrahmens einer Brille; einen Linsendicken-Messapparat enthaltend zwei Fühler für die Linse, und einen Messapparat zum Messen eines Abstands als eine Dicke zwischen den beiden Fühlern; einen Berechnungs-/Steuerapparat zur Beurteilung, ob der Linsenrohling groß genug ist, um in die Linsenrahmenkonfiguration geschnitten zu werden; und eine vom Berechnungs-/Steuerapparat gesteuerte Anzeigevorrichtung;

    **dadurch gekennzeichnet,**
    **dass** einer der beiden Fühler an einer Vorderfläche des Linsenrohlings anzulegen ist und der andere von ihnen an einer Rückfläche der Linse anzulegen ist; und
    **dass** die Anzeigevorrichtung so vom Berechnungs-/Steuerapparat gesteuert wird, dass sie wenigstens einen Winkelbereich ($\alpha_1$ und/oder $\alpha_2$) des Vektorradius anzeigt, der als nicht groß genug beurteilt wird, wenn die beiden Fühler aneinander anliegen und der Linsendicken-Messapparat ein Dickensignal ausgibt, das einen vorbestimmten oder einen kleineren Wert hat.

2.  Linsenrohling-Beurteilungsapparat für eine Linsenschleifmaschine, enthaltend:

    einen Rahmenkonfigurations-Eingabeapparat zum Eingeben einer Vektorradiusinformation über die Konfiguration eines Linsenrahmens einer Brille; einen Linsendicken-Messapparat enthaltend zwei Fühler für die Linse, und einen Messapparat zum Messen eines Abstands als eine Linsendicke zwischen den beiden Fühlern;

einen Berechnungs-/Steuerapparat zur Beurteilung, ob der Linsenrohling groß genug ist, um in die Linsenrahmenkonfiguration geschnitten zu werden;

eine vom Berechnungs-/Steuerapparat gesteuerte Anzeigevorrichtung;

**dadurch gekennzeichnet, dass**

einer der beiden Fühler an einer Vorderfläche des Linsenrohlings anzulegen ist und der andere von ihnen an einer Rückfläche der Linse anzulegen ist; und

der Berechnungs-/Steuerapparat automatisch einen Schneidursprung korrigiert, wenn der Linsendicken-Messapparat von der Oberfläche der Linse wegkommt und der Berechnungs-/Steuerapparat den Linsenrohling als nicht groß genug, um in die Linsenrahmenkonfiguration geschnitten zu werden, beurteilt hat, wenn die beiden Fühler aneinander anliegen und der Linsendicken-Messapparat ein Dickensignal ausgibt, das einen vorbestimmten oder kleineren Wert hat.

## Revendications

1. Appareil de mesure d'ébauche de lentille pour une machine à meuler les lentilles comprenant :

   un appareil d'entrée de configuration de monture pour entrer une information de rayon vecteur de la configuration d'une monture de verre d'une paire de lunettes ;

   un appareil de mesure d'épaisseur de lentille incluant deux palpeurs de ladite lentille, et un appareil de mesure pour mesurer une distance représentant une épaisseur entre les deux palpeurs ;

   un appareil de calcul/commande pour estimer si une ébauche de lentille est suffisamment grande pour être découpée selon ladite configuration de monture de verre ; et

   un dispositif d'affichage commandé par ledit appareil de calcul/commande ;

   **caractérisé en ce que**

   l'un des deux palpeurs étant mis en butée contre une face frontale de ladite lentille et l'autre étant mis en butée contre une face arrière de ladite lentille ;

   et

   le dispositif d'affichage est commandé par ledit appareil de calcul/commande de façon à afficher au moins une étendue angulaire ($\alpha_1$ et/ou $\alpha_2$) dudit rayon vecteur qui est estimé ne pas être assez grand lorsque lesdits deux palpeurs sont en butée l'un contre l'autre est ledit appareil de mesure d'épaisseur de lentille délivre un signal d'épaisseur d'une valeur prédéterminée ou moindre.

2. Appareil de mesure d'ébauche de lentille pour une machine à meuler les lentilles incluant,

   un appareil d'entrée de configuration de monture pour entrer une information de rayon vecteur de la configuration d'une monture de verre d'une paire de lunettes ;

   un appareil de mesure d'épaisseur de lentille incluant deux palpeurs de ladite lentille, et un appareil de mesure pour mesurer une distance représentant une épaisseur entre les deux palpeurs ;

   un appareil de calcul/commande pour estimer si une ébauche de lentille est suffisamment grande pour être découpée selon ladite configuration de monture de verre ;

   un dispositif d'affichage commandé par ledit appareil de calcul/commande ;

   **caractérisé en ce que**

   l'un des deux palpeurs étant mis en butée contre une face frontale de ladite lentille et l'autre étant mis en butée contre une face arrière de ladite lentille, et

   ledit appareil de calcul/commande corrige automatiquement une origine de découpe lorsque ledit appareil de mesure d'épaisseur sort de la surface de ladite lentille et que ledit appareil de calcul/commande estime que l'ébauche de lentille n'est pas assez grande pour être découpée dans la configuration de monture de verre lorsque les deux palpeurs sont en butée l'un contre l'autre et ledit appareil de mesure d'épaisseur de lentille délivre un signal d'épaisseur d'une valeur prédéterminée ou moindre.

EP 0 379 427 B2

# F I G . I

# FIG.2A

# FIG.2B

# FIG.2C

# FIG.3

# FIG. 4A

# FIG. 4B

12

# FIG. 5

LENS
DIAMETER    $\rho_d$ OR MORE

$\alpha_1° - \alpha_2°$

IN $\underline{\quad a'\quad}$    UP $\underline{\quad b'\quad}$

IN

UP

I

D

S

# FIG. 6

# FIG. 7

# FIG. 8

14

# FIG.9

# F I G. IOA

# F I G. IOB

# F I G. 11

START

FRAME CONFIGURATION MEASUREMENT — 10

TO FIND CUTTING LOCUS — 11

TO READ $\rho_i'$, $\theta_i'$, E
$i \rightarrow 0$ — 12

$i \rightarrow i + 1$ — 13

$i = N$ ? — 14
NO / YES

$i = N + 1 = 0$ — 15

TO RETURN TO INITIAL POSITION — 16

$S_0' = \bar{S}_0'$ ? — 17
NO → ALARM DISPLAY — 18
YES

E N D

# FIG. 12

# F I G. 13

# F I G. 14

# FIG. 15